# EUROPEAN PATENT SPECIFICATION

(11) **EP 1 769 292 B1**
(45) Date of publication and mention of the grant of the patent: **22.10.2014**
(21) Application number: 05762807.5
(22) Date of filing: 06.07.2005
(51) Int. Cl.: G05B 13/02

(54) **PROCESS-RELATED SYSTEMS AND METHODS**
PROZESSBEZOGENE SYSTEME UND VERFAHREN
SYSTEMES ET PROCEDES ASSOCIES AUX PROCESSUS

(30) Priority: 06.07.2004 GB 0415143
(43) Date of publication of application: 04.04.2007
(73) Proprietor: Xpertrule Software Limited, Salford M6 6FP (GB)
(72) Inventor: AL-ATTAR, Akeel, Manchester M24 1NF (GB); DUEBEL, Clive, West Sussex RH12 5TJ (GB)
(74) Representative: Boden, Keith McMurray
(86) International application number: PCT/GB2005/002639
(87) International publication number: WO 2006/003446

(56) References cited:
- EP-A- 0 337 423
- US-A- 5 890 143
- US-A- 6 064 920

## Description

The present invention relates to a system for and a method of controlling processes, in particular a system for and a method of providing for the on-line control of industrial manufacturing processes, which typically are required to operate in a continuous or semi-continuous mode.

The present invention finds particular application in relation to processes of a multivariable nature, that is, processes which have a plurality of input and output variables, and are very difficult to control and maintain at a desired performance measure.

In such processes, the complexity of the interactive influences, which arise from changes in the input variables, make it very difficult for operators rationally to adjust the setpoints of the process variables in a systematic manner in order to achieve a desired performance measure. In principle, a change in any input variable can affect all of the output variables and the number of resulting permutations can be very large. By way of example, with 5 inputs and 4 outputs, there can be a total of 5! X 4! (2880) interactions, if all input setpoints are manipulated.

Also, in such processes, a number of factors associated with a process can change over time, such factors being attributed as process drift. For example, a process plant is subject to a number of factors which can alter performance over time, which include wear, maintenance, modifications and upgrades, and the properties of the raw materials as used in a process can change over time, particularly where the raw material is a natural product, such as rocks or ores.

The present applicant's earlier WO-A-03/005134 discloses an existing process-related system and method for improving the performance of complex process operations, and specifically utilizes rule sets, where representable as decision trees, to achieve a performance improvement.

The present applicant has now recognized that it is possible to achieve improved control of processes, which have a plurality of manipulatable process variables, through the use of a fuzzy rule set, where representable as a fuzzy decision tree.

The concept of fuzzy decision trees is known, but, to date, there has been no recognition whatsoever, that fuzzy decision trees can be utilized to determine the setpoints for manipulatable variables which are required to achieve one or more performance measures in a process, or to determine unique values for performance measures from the actual values of process variables as obtained from a process.

Furthermore, as compared to conventional decision trees, the use of fuzzy decision trees enables the setpoints for manipulatable variables to be determined for any unique value of one or more performance measures over an entire linear range, whereas conventional decision trees would only allow the setpoints for manipulatable variables to be determined for a predetermined number of averaged values of the one or more performance measures as represented by the respective outcome leaves of the decision trees. Thus, the level of control as achievable through the use of fuzzy decision trees is far greater as compared to that achieveable through existing decision trees.

With this recognition, the present invention aims to provide a system for and a method of providing for improved control of processes through the use of a fuzzy rule set, where representable as fuzzy decision trees, as a means of determining the setpoints for manipulatable variables which are required to achieve one or more performance measures in a process.

US-A-5890143 discloses a system and method for the refinement of decision trees, in which an evaluation object is categorized.

US-A-6064920 discloses the application of a fuzzy decision tree in updating the parameters in a typical feedback controller.

In one aspect the present invention provides a process control system for use in controlling a process, which has a plurality of process variables, including a plurality of manipulatable process variables, to achieve a unique target value for at least one performance measure, the system comprising: an optimization module for predicting setpoint values for at least ones of the manipulatable process variables to achieve a unique target value for the at least one performance measure in accordance with a fuzzy rule set, each rule including a plurality of decision points corresponding to split variables relating to the process variables and a plurality of outcomes, wherein the at least one fuzzy rule of the fuzzy rule set enables setpoint values to be predicted for the manipulatable process variables for a unique target value for the at least one performance measure.

Preferably, the optimization module is invoked at predetermined intervals.

In one embodiment the optimization module is operative automatically to control operation of the process in accordance with the predicted setpoint values for the manipulatable process variables.

Preferably, the system further comprises: an error compensation module which is operative to log from the process actual values for the process variables under which the process is operating and the actual value of the at least one performance measure as achieved through operation of the process, and determine correction factors for the target value of the at least one performance measure as used by the optimization module in determining predicted setpoint values for the manipulatable process variables.

In one embodiment the correction factors represent the differences between the respective values of the at least one performance measure as determined from the fuzzy decision rules for the actual setpoint values of the process variables under which the process is operating and the one or more actual performance measures as obtained from the process. Preferably, the error compensation module is invoked at predetermined intervals.

Preferably, the system further comprises: a rule generation module for generating a rule set for the at least one performance measure.

More preferably, the system further comprises: a fuzzification module for generating a fuzzy rule set from the generated rule set.

Preferably, the system further comprises: a data collection module for collecting historic data, which represents the process variables, as obtained from the process.

More preferably, the system further comprises: a data processing module for providing a data set from the historic data.

In a further aspect the present invention provides a process control method for use in controlling a process, which has a plurality of process variables, including a plurality of manipulatable process variables, to achieve a unique target value for at least one performance measure, the method comprising the step of: predicting setpoint values for at least ones of the manipulatable process variables to achieve a unique target value for the at least one performance measure in accordance with a fuzzy rule set, each rule including a plurality of decision points corresponding to split variables relating to the process variables and a plurality of outcomes.

Preferably, the value prediction step is invoked at predetermined intervals.

In one embodiment the method further comprises the step of: automatically controlling operation of the process in accordance with the predicted setpoint values for the manipulatable process variables.

Preferably, the method further comprises the steps of: logging from the process actual values for the process variables under which the process is operating and the at least one performance measure as actually achieved through operation of the process; and determining correction factors for the target value of the at least one performance measure as used in determining predicted setpoint values for the manipulatable process variables.

In one embodiment the correction factors represent the differences between the respective values of the at least one performance measure as determined from the fuzzy decision rules for the actual setpoint values of the process variables under which the process is operating and the one or more actual performance measures as obtained from the process.

Preferably, correction factor determining step is invoked at predetermined intervals.

Preferably, the method further comprises the step of: generating a rule set for the at least one performance measure.

More preferably, the method further comprises the step of: generating a fuzzy rule set from the generated rule set.

Preferably, the method further comprises the step of: collecting historic data, which represents the process variables, as obtained from the process.

Preferably, the method further comprises the step of: providing a data set from the historic data.

Examples of process plants where the present invention can be employed are as follows.
- Milling plants in which coarse, solid materials are continuously milled to produce fine powders to specified particle size distributions. Such mills include hammer mills, attritor mills, ball mills, air or water jet mills and roll mills.
- Chemical and minerals processing plants, such as cement manufacturing plants.
- Power generating plants and ancillary equipment equipped with conventional control system elements.
- Food processing plants.
- Paper milling plants.
- Refrigeration plants.
- Heating plants.
- Ventilation plants.

The present invention finds application both in relation to processes where setpoints corresponding to process variables are automatically manipulated, and processes where setpoints corresponding to process variables are manually manipulated by an operator.

In relation to processes where setpoints corresponding to process variables are automatically manipulated, the present invention can be interfaced directly to those processes in order to provide enhanced adaptive control.

In relation to processes where setpoints corresponding to process variables are manually manipulated by an operator, the present invention can be utilized to prompt the operator through an interface, typically a visual interface, in order to aid judgemental decisions on adaptive control requirements.

By directly simplifying the very complex task of regularly adjusting the multivariable control input setpoints of a process, the performance of a process can be continuously optimized in relation to performance measures, where such measures can be technical and business targets.

The present invention can also be used as an off-line planning tool for investigation of manufacturing process characteristics, in order to develop operational knowledge and insight to aid process performance development and improvement planning.

Another particularly advantageous feature of the present invention is in enabling easy and rapid updating, either locally or remotely, of the process control variable decision trees at regular intervals, or when plant changes or maintenance are performed and new data becomes available.

A preferred embodiment of the present invention will now be described hereinbelow by way of example only with reference to the accompanying drawings, in which:

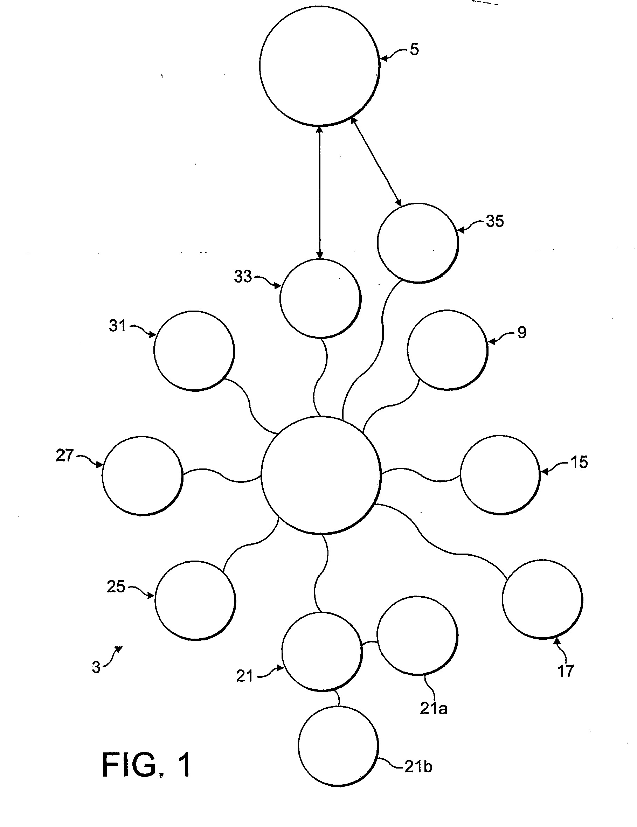

Figure 1 schematically illustrates a process control system in accordance with a preferred embodiment of the present invention;
Figure 2 illustrates an exemplary decision tree as developed by the rule generation module of the system of Figure 1; and
Figure 3 illustrates an exemplary fuzzy decision tree, as a fuzzification of the decision tree of Figure 2, as developed by the fuzzification module of the system of Figure 1.

The process control system 3 is operative to control a process system 5 to maintain one or more critical performance measures (CPMs) as desired for the process system 5.

CPMs represent parameters which are critical to the performance of the process system 5, and typically include operating cost, energy usage, yield, emissions and product characteristics.

For any process, each CPM is influenced by one or more process variables (PVs). The PVs include manipulatable variables (MVs) which are represented by input setpoints that can be manipulated in the control of the process system 5, typical MVs including flow rates, temperatures and pressures, and disturbance variables (DVs) which cannot be manipulated in the control of the process system 5, typical DVs including the composition of a raw material and external factors, such as ambient temperature.

In one embodiment the process system 5 comprises a milling system, in a preferred embodiment an air classifier milling system (for example, as supplied by Hosokawa Micron GmbH, Cologne, Germany), for producing a milled product from a raw material, where such a mill includes a feeder for feeding the raw material, a grinding rotor for grinding the raw material, a classifier wheel for dynamically classifying the ground material, and an air flow source for supplying an operative air flow. For such a mill, the one or more CPMs relate to the particle size distribution of the milled product, and in one embodiment can comprise the particle sizes fractions d₁₀, d₅₀ and d₉₀, where the MVs can comprise the feeder speed, the rotor speed, the classifier speed and the air flow rate.

The system comprises a data collection module 9 for collecting historic data as obtained from the process system 5, which represents data attributable to PVs and CPMs. In this embodiment the data collection module 9 is configured to download data from one or more storage locations, typically databases, but in other embodiments the data could be transferred using a storage medium.

In this embodiment a sub-set of the collected historic data for one or more time periods is extracted from the collected data to provide an extracted data set to allow for rule testing as will be described in more detail hereinbelow, with the remaining data providing an operable, main data set.

The system further comprises a data modification module 15 for enabling the main data set to be checked for errors and altered in response thereto, for example, by deleting bad records and making corrections, and also determining further candidate PVs from the main data set, such as ratios of flows, overall heat transfer coefficients, average values, data variance and standard deviations.

The system further comprises a rule generation module 17 which utilizes rule induction techniques having associated rule induction parameters to identify patterns in the main data set for each CPM. The identified patterns are expressed as rules, depictable as decision trees, which define, in whole or in part, the variation in the respective CPM in relation to one or more of the PVs, and together define a rule set. In one embodiment the rule generation module 17 can utilize a model data set as obtained from a simulation model, and also be configured to allow for the characterization of rules based on human experience in the operation of the process system 5.

Merely by way of example, one such rule could be expressed as:
If PV1 (e.g. feeder speed) >= A
And PV2 (e.g. rotor speed) < B
And PV3 (e.g. classifier speed) >= C
Then CPM (e.g. particle size fraction d₁₀) = D

The system further comprises a rule verification module 21 for verifying the rules of the determined rule set.

In this embodiment the rule verification module 21 includes a rule test sub-module 21a which utilizes the extracted data set which was not utilized in generating the determined rules, with the rules being verified by determining that each rule is satisfied by the data of the extracted data set. Where any of the rules is not satisfied, the rule generation module 17 can be re-invoked to utilize one or both of modified rule induction techniques and rule induction parameters.

In this embodiment the rule verification module 21 further includes a rule modification sub-module 21b which allows the rule generation module 17 to be re-invoked to utilize one or both of modified rule induction techniques and rule induction parameters where a modified rule set is required, for example, because of process conditions envisageable by a process operator.

The system further comprises a constraint definition module 25 for setting non-violable limiting constraints to the setpoints of one or more of the MVs.

The system further comprises a fuzzification module 27 for generating fuzzified rules, depictable as fuzzy decision trees, from the determined rule set.

The fuzzification of decision trees is an established technique, which extends the classification of operating data to allow partial membership of a pattern which is expressed by a set of rules. As discussed hereinabove, however, there has not previously been any recognition that fuzzy decision trees can be utilized to determine the input setpoints of the MVs which are required to maintain the one or more CPMs of a process system 5.

Merely by way of example, one such fuzzified rule could be expressed as:
If PV1 (e.g. feeder speed) = A
And PV2 (e.g. rotor speed) = B
And PV3 (e.g. classifier speed) = C
Then CPM (e.g. particle size fraction d₁₀) is A1% weighted to P and A2% weighted to Q, resulting in a prediction of A1%P + A2%Q.

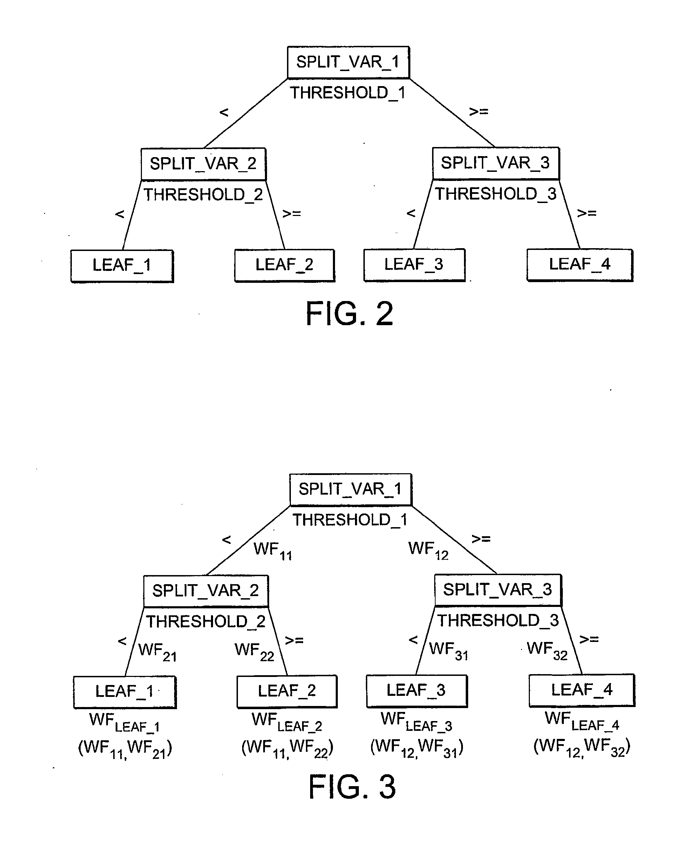

Figure 2 illustrates a decision tree which depicts an exemplary rule for one CPM as generated by the rule generation module 17. It should be appreciated that this rule is provided merely by way of exemplification.

At each internal node in the decision tree, a split variable SPLIT_VAR_X, which corresponds to the value of a PV, is compared with a threshold value

THRESHOLD_X, and the direction of branching is based on if the value of the PV is greater than or equal to or less than the threshold value THRESHOLD_*X*.

Each terminal node LEAF_*X* represents a particular outcome leaf, that is, an average value for the CPM, and has an associated set of average values for the PVs.

Through operation of the fuzzification module 27, and as illustrated in Figure 3, the decision tree for the generated rule is fuzzified, such that each internal node includes a weighting algorithm, which algorithm is operative to attribute a weighting factor WF*_{XN}* to each of the branches at the internal node, in this embodiment as a function of the deviation of the value of the respective PV from the threshold value THRESHOLD_*X*, and the outcome leaves LEAF_*X* each then have a weighting factor WF_{LEAF_*X*} which is determined from the weighting factors WF*_{XN}* at each of the branches which lead to the respective outcome leaf LEAF_*X*.

The resulting fuzzy decision tree allows a unique value to be predicted for the CPM for any set of values for the PVs by de-fuzzification of the decision tree, where the values of the PVs determine the weighting factor WF_{LEAF_*X*} for each outcome leaf LEAF_*X*, and a unique value for the CPM is determined based on the values of the CPM at each outcome leaf LEAF_*X* and the weighting factor WF_{LEAF_*X*} for each outcome leaf LEAF_*X*.

By way of example, and for the exemplified fuzzy decision tree, suppose the values of the CPM at the outcome leaves LEAF_*X* are P, Q, R and S and the values of the weighting factor WF_{LEAF_*X*} for the outcome leaves LEAF_*X* are A1%, A2%, A3% and A4%, the specific value of the CPM would be determined as A1%P + A2%Q + A3%R + A4%S.

The system further comprises a critical performance measure input module 31 by means of which an operator selects the one or more CPMs, inputs a target value for each CPM, upper and lower target limits for each CPM, and in one embodiment, where there are a plurality of CPMs, a ranking for the CPMs in order of significance. As will be described in more detail hereinbelow, where there are a plurality of CPMs, the system determines the MVs which provide for the closest fit to the target values for the CPMs, where taking into account any ranking that may be applied to the CPMs.

The system further comprises an optimization module 33 for determining the input setpoints for the MVs which are required to achieve the target values for the one or more CPMs, or, where there are a plurality of CPMs, at least within the ranges as defined by the upper and lower target limits for the CPMs, where taking into account the limiting constraints set for any of the MVs, and in this embodiment subsequently applying the determined setpoints for the MVs automatically to the process system 5. In an alternative embodiment the determined setpoints for the MVs could be presented to an operator, and then applied by an operator to the process system 5.

The optimization module 33 utilizes a multivariable optimization algorithm, in this embodiment a genetic algorithm, which is operative simultaneously to solve the one or more fuzzy decision trees for the respective CPMs, such as to determine setpoints for the MVs which are predicted to obtain the one or more CPMs at the specified target values or, where the specified target values cannot be achieved, as to closely match the specified target values as possible within the specified target limits where taking into account the non-violable limiting constraints set for any of the MVs. In this embodiment the values of any DVs in the one or more the decision trees are set to an average value as determined from the historical data. In another embodiment the values of any DVs in the one or more the decision trees can be measured directly from the process system 5.

As will be described in more detail hereinbelow, in this embodiment the optimization module 33 is configured to be invoked at predeterminable intervals, such as to allow for compensation of the predicted setpoints of the MVs in accommodating errors in fuzzy decision trees which result from process drift.

The system further comprises an error compensation module 35 which logs, in real-time from the process system 5, data which corresponds both to the actual PVs under which the process system 5 is operating, including the MVs and the DVs, and the one or more CPMs as actually achieved through operation of the process system 5 at the setpoints for the MVs, and determines correction factors, which are utilized by the optimization module 33, when re-invoked, in determining new setpoints for the MVs.

In this embodiment the actual PVs as obtained from the process system 5 are applied to the fuzzy decision trees for the one or more CPMs in order to determine one or more model CPMs. In relation to the determination of the model CPMs by utilizing actual PVs, it is important to recognize that, in practice, the setpoints of the actual MVs do not necessarily correspond to the setpoints of the predicted MVs owing, for example, to control errors, and the values of the DVs are the values which are actually experienced by the process system 5 and not average values as can be employed in predicting the values of the MVs.

In this embodiment the correction factors are the differences between the respective values of the one or more model CPMs and the one or more actual CPMs as obtained from the process system 5, and the resulting correction factors are subtracted from the target values of the one or more CPMs as employed in predicting the values of the MVs.

Operation of the above-described process control system will now be described hereinbelow.

For a selected process system 5, historic data is collected by the data collection module 9 and, as necessary, modified by the data modification module 15 to provide a main data set and an extracted data set. Alternatively or additionally, model data can be used in constructing the data sets.

The rule generation module 17 is then operative to determine, from identified patterns in the main data set, rules, which define, in whole or in part, the variation in the one or more CPMs in relation to one or more of the PVs, and together define a rule set. In this embodiment the rule generation module 17 also allows for the characterization of rules based on manual input, where derived from human experience in the operation of the process system 5.

The resulting rules of the rule set are then verified by the rule test sub-module 21a. Where any of the rules are not satisfied by the extracted data set, the rule modification sub-module 21b re-invokes the rule generation module 17 to define modified rules for the one or more CPMs.

The operator then sets limiting constraints to the setpoints of one or more of the MVs.

The fuzzification module 27 is then operative to generate fuzzified rules, depictable as fuzzy decision trees, from the determined rule set.

The resulting fuzzified rule set is then available for use in controlling the process system 5. In one embodiment this aspect of the process control system can be performed off-line, but could be performed *in situ.*

The operator then, by means of the critical performance measure input module 31, selects one or more CPMs in respect of which the process system 5 is to be controlled, inputs a target value for each CPM, upper and lower target limits for each CPM, and in one embodiment, where there are a plurality of CPMs, a ranking for the CPMs in order of significance.

The optimization module 33 is then operative to determine the input setpoints for the MVs which are predicted to obtain the one or more CPMs at the specified target values or, where the specified target values cannot be achieved, as to closely match the specified target values as possible within the specified target limits where taking into account the limiting constraints set for any of the MVs.

In this embodiment, on determining the input set points for the MVs, the optimization module 33 applies the determined setpoints for the MVs automatically to the process system 5.

In an alternative embodiment the determined setpoints for the MVs could be presented to an operator, and then applied by an operator to the process system 5.

The process system 5 then operates where utilizing the input setpoints for the MVs.

During operation of the process control system, the error compensation module 35 logs, in real-time from the process system 5, data which corresponds to the one or more CPMs as actually achieved through operation of the process system 5 at the setpoints for the MVs, and determines correction factors, which represent any errors between the actual and predicted values of the one or more CPMs and are attributed to process drift.

In this embodiment the optimization module 33 is invoked at predeterminable intervals, and utilizes the correction factors as determined by the error correction module 35, such as to provide for compensation in the predicted setpoints of the MVs, and thereby accommodate errors in fuzzy decision trees which result from process drift.

The process system 5 then continues to operate under such control of the process control system.

Where the one or more CPMs need to be reset to reflect current processing requirements, the operator utilizes the critical performance measure input module 31 to select the one or more CPMs and input a target value for each CPM, upper and lower target limits for each CPM, and in one embodiment, where there are a plurality of CPMs, a ranking for the CPMs in order of significance.

Following operation of the critical performance measure input module 31, the optimization module 33 is operative to determine the input setpoints for the MVs which are predicted to obtain the one or more new CPMs at the specified target values or, where the specified target values cannot be achieved, as to closely match the specified target values as possible within the specified target limits, where taking into account the limiting constraints set for any of the MVs.

In one embodiment the rule generation module 17 can be invoked at predetermined intervals, for example, when further data is available to the data collection module 9 as regards the operation of the process system 5, in order to generate a refined rule set for the one or more CPMs, which rule set, following fuzzification by the fuzzification module 27, is then utilized by the process control system in controlling the operation of the process system 5.

Finally, it will be understood that the present invention has been described in its preferred embodiment and can be modified in many different ways without departing from the scope of the invention as defined by the appended claims.

## Claims

1. A process control system for use in controlling a process, which has a plurality of process variables (PVs), including a plurality of manipulatable process variables (MVs), to achieve a unique target value for at least one performance measure (CPM), the system comprising:
an optimization module (33) for predicting setpoint values for at least ones of the manipulatable process variables (MVs) to achieve a unique target value for at least one performance measure (CPM) in accordance with a fuzzy rule set, each fuzzy rule including a plurality of decision points corresponding to split variables relating to the process variables (PVs) and a plurality of outcomes, wherein the at least one fuzzy rule of the fuzzy rule set enables setpoint values to be predicted for the manipulatable process variables (MVs) for a unique target value for the at least one performance measure (CPM).

2. The system of claim 1, wherein the optimization module (33) is invoked at predetermined intervals.

3. The system of claim 1 or 2, wherein the optimization module (33) is operative automatically to control operation of the process in accordance with the predicted setpoint values for the manipulatable process variables (MVs).

4. The system of any of claims 1 to 3, further comprising:
an error compensation module (35) which is operative to log from the process actual values for process variables (PVs) under which the process is operating and the at least one performance measure (CPM) as achieved through operation of the process, and determine correction factors for the target value of the at least one performance measure (CPM) as used by the optimization module (33) in determining predicted setpoint values for the manipulatable process variables (MVs).

5. The system of claim 4, wherein the correction factors represent the differences between the respective values of the at least one performance measure (CPM) as determined from the fuzzy rule set for the actual setpoint values of the process variables (PVs) under which the process is operating and the one or more actual performance measures (CPM) as obtained from the process.

6. The system of claim 4 or 5, wherein the error compensation module (35) is invoked at predetermined intervals.

7. The system of any of claims 1 to 6, further comprising:
a rule generation module (17) for generating a rule set for the at least one performance measure (CPM).

8. The system of claim 7, further comprising:
a fuzzification module (27) for generating a fuzzy rule set from the generated rule set.

9. The system of any of claims 1 to 8, further comprising:
a data collection module (9) for collecting historic data, which represents the process variables (PVs), as obtained from the process.

10. The system of claim 9, further comprising:
a data processing module (15) for providing a data set from the historic data.

11. A process control method for use in controlling a process, which has a plurality of process variables (PVs), including a plurality of manipulatable process variables (MVs), to achieve a unique target value for at least one performance measure (CPM), the method comprising the step of:
predicting setpoint values for at least ones of the manipulatable process variables (MVs) to achieve a unique target value for the at least one performance measure (CPM) in accordance with a fuzzy rule set, each fuzzy rule including a plurality of decision points corresponding to split variables relating to the process variables (PVs) and a plurality of outcomes.

12. The method of claim 11, wherein the value prediction step is invoked at predetermined intervals.

13. The method of claim 11 or 12, further comprising the step of:
automatically controlling operation of the process in accordance with the predicted setpoint values for the manipulatable process variables (MVs).

14. The method of any of claims 11 to 13, further comprising the steps of:
logging from the process actual values for process variables (PVs) under which the process is operating and the at least one performance measure (CPM) as achieved through operation of the process; and
determining correction factors for the target value of the at least one performance measure (CPM) as used in determining predicted setpoint values for the manipulatable process variables (MVs).

15. The method of claim 14, wherein the correction factors represent the differences between the respective values of the at least one performance measure (CPM) as determined from the fuzzy rule set for the actual setpoint values of the process variables (PVs) under which the process is operating and the one or more actual performance measures (CPM) as obtained from the process.

16. The method of claim 14 or 15, wherein the correction factor determining step is invoked at predetermined intervals.

17. The method of any of claims 11 to 16, further comprising the step of:
generating a rule set for the at least one performance measure (CPM).

18. The method of claim 17, further comprising the step of:
generating a fuzzy rule set from the generated rule set.

19. The method of any of claims 11 to 18, further comprising the step of:
collecting historic data, which represents the process variables (PVs), as obtained from the process.

20. The method of claim 19, further comprising the step of:
providing a data set from the historic data.

## Patentansprüche

1. Prozessleitsystem zum Steuern eines Prozesses, der mehrere Prozessvariablen (PVs) aufweist und mehrere manipulierbare Prozessvariablen (MVs) umfasst, um einen eindeutigen Zielwert für mindestens ein Leistungsmaß (CPM) zu erhalten, wobei das System Folgendes umfasst:
ein Optimierungsmodul (33) zum Vorhersagen von Sollwerten für mindestens eine der manipulierbaren Prozessvariablen (MVs), um einen eindeutigen Zielwert für mindestens ein Leistungsmaß (CPM) in Übereinstimmung mit einem Fuzzy-Regelset zu erhalten, wobei jede Fuzzy-Regel mehrere Entscheidungspunkte umfasst, die geteilten Variablen entsprechen, die sich auf die Prozessvariablen (PVs) und mehrere Ergebnisse beziehen, wobei die mindestens eine Fuzzy-Regel des Fuzzy-Regelsets ein Vorhersagen der Sollwerte für die manipulierbaren Prozessvariablen (MVs) für einen eindeutigen Zielwert für das mindestens eine Leistungsmaß (CPM) ermöglicht.

2. System nach Anspruch 1, wobei das Optimierungsmodul (33) in festgelegten Intervallen aufgerufen wird.

3. System nach Anspruch 1 oder 2, wobei das Optimierungsmodul (33) automatisch funktioniert, um den Prozessablauf in Übereinstimmung mit vorhergesagten Sollwerten für die manipulierbaren Prozessvariablen (MVs) zu steuern.

4. System nach einem der Ansprüche 1 bis 3, ferner umfassend:
ein Fehlerkompensationsmodul (35), das betriebsfähig ist, Prozessistwerte für Prozessvariablen (PVs), unter denen der Prozess arbeitet, und das mindestens eine Leistungsmaß (CPM), wie es durch den Betrieb des Prozesses erlangt wurde, zu protokollieren und Korrekturfaktoren für den Zielwert des mindestens einen Leistungsmaßes (CPM) festzulegen, wie vom Optimierungsmodul (33) zum Festlegen vorhergesagter Sollwerte für die manipulierbaren Prozessvariablen (MVs) genutzt.

5. System nach Anspruch 4, wobei die Korrekturfaktoren den Unterschied zwischen den jeweiligen Werten des mindestens einen Leistungsmaßes (CPM), wie durch das Fuzzy-Regelset für die aktuellen Sollwerte der Prozessvariablen (PVs), unter denen der Prozess arbeitet und dem einen oder mehr aktuellen Leistungsmaß (CPM), wie es aus Prozess erhalten wurde, darstellen.

6. System nach Anspruch 4 oder 5, wobei das Fehlerkompensationsmodul (35) in festgelegten Intervallen aufgerufen wird.

7. System nach einem der Ansprüche 1 bis 6, ferner umfassend:
ein Regelgenerationsmodul (17) zum Erstellen eines Regelsatzes für das mindestens eine Leistungsmaß (CPM).

8. System nach Anspruch 7, ferner umfassend:
ein Fuzzifizierungsmodul (27) zum Erstellen eines Fuzzy-Regelsatzes aus dem erstellten Regelsatz.

9. System nach einem der Ansprüche 1 bis 8, ferner umfassend:
ein Datensammelmodul (9) zum Sammeln historischer Daten, die die Prozessvariablen (PVs), wie aus dem Prozess erhalten, wiedergeben.

10. System nach Anspruch 9, ferner umfassend:
ein Datenverarbeitungsmodul (15) zum Bereitstellen eines Datensatzes aus den historischen Daten.

11. Prozessleitverfahren zum Steuern eines Prozesses, der mehrere Prozessvariablen (PVs) aufweist, und mehrere manipulierbare Prozessvariablen (MVs) umfasst, um einen eindeutigen Zielwert für mindestens ein Leistungsmaß (CPM) zu erhalten, wobei das Verfahren folgenden Schritt umfasst:
Vorhersagen von Sollwerten für mindestens eine der manipulierbaren Prozessvariablen (MVs), um einen eindeutigen Zielwert für das mindestens eine Leistungsmaß (CPM) in Übereinstimmung mit dem Fuzzy-Regelsatz zu erhalten, wobei jede Fuzzy-Regel mehrere Entscheidungspunkte umfasst, die geteilten Variablen entsprechen, die sich auf die Prozessvariablen (PVs) und mehrere Ergebnisse, beziehen.

12. Verfahren nach Anspruch 11, wobei der Schritt der Wertevorhersage in festgelegten Intervallen aufgerufen wird.

13. Verfahren nach Anspruch 11 oder 12, das ferner folgenden Schritt umfasst:
automatisches Steuern vom Prozessablauf in Übereinstimmung mit den vorhergesagten Sollwerten für die manipulierbaren Prozessvariablen (MVs).

14. Verfahren nach einem der Ansprüche 11 bis 13, das ferner folgende Schritte umfasst:
Protokollieren der Prozessistwerte für Prozessvariablen (PVs), unter denen der Prozess arbeitet und des mindestens einen Leistungsmaßes (CPM), wie durch das Steuern vom Prozessablauf erhalten; und
Festlegen von Korrekturfaktoren für den Zielwert des mindestens einen Leistungsmaßes (CPM), wie beim Festlegen vorhergesagter Sollwerte für die manipulierbaren Prozessvariablen (MVs) verwendet.

15. Verfahren nach Anspruch 14, wobei die Korrekturfaktoren den Unterschied zwischen den jeweiligen Werten des mindestens einen Leistungsmaßes (CPM), wie durch das Fuzzy-Regelset für die aktuellen Sollwerte der Prozessvariablen (PVs), unter denen der Prozess arbeitet und dem einen oder mehr aktuellen Leistungsmaß (CPM), wie es aus Prozess erhalten wurde, darstellen.

16. Verfahren nach Anspruch 14 oder 15, wobei der Schritt zum Festlegen von Korrekturfaktoren in festgelegten Intervallen aufgerufen wird.

17. Verfahren nach einem der Ansprüche 11 bis 16, das ferner folgenden Schritt umfasst:
Erstellen eines Regelsatzes für das mindestens eine Leistungsmaß (CPM).

18. Verfahren nach Anspruch 17, das ferner folgenden Schritt umfasst:
Erstellen eines Fuzzy-Regelsatzes aus dem erstellten Regelsatz.

19. Verfahren nach einem der Ansprüche 11 bis 18, das ferner folgenden Schritt umfasst:
Sammeln historischer Daten, die die Prozessvariablen (PVs), wie aus dem Prozess erhalten, wiedergeben.

20. Verfahren nach Anspruch 19, das ferner folgenden Schritt umfasst:
Bereitstellen eines Datensatzes aus den historischen Daten.

## Revendications

1. Système de commande de processus destiné à être utilisé pour commander un processus, qui a une pluralité de variables de processus (PV), comportant une pluralité de variables de processus manipulables (MV), pour obtenir une valeur cible unique pour au moins une mesure de performances (CPM), le système comprenant :
un module d'optimisation (33) pour prédire des valeurs de consigne pour au moins certaines des variables de processus manipulables (MV) pour obtenir une valeur cible unique pour au moins une mesure de performances (CPM) en fonction d'un ensemble de règles floues, chaque règle floue comprenant une pluralité de points de décision correspondant à des variables fractionnées relatives aux variables de processus (PV) et une pluralité de résultats, dans lequel l'au moins une règle floue de l'ensemble de règles floues permet de prédire des valeurs de consigne pour les variables de processus manipulables (MV) pour une valeur cible unique pour l'au moins une mesure de performances (CPM).

2. Système selon la revendication 1, dans lequel le module d'optimisation (33) est invoqué à des intervalles prédéterminés.

3. Système selon la revendication 1 ou 2, dans lequel le module d'optimisation (33) est automatiquement opérationnel pour commander le fonctionnement du processus en fonction des valeurs de consigne prédites pour les variables de processus manipulables (MV).

4. Système selon l'une quelconque des revendications 1 à 3, comprenant en outre :
un module de compensation d'erreur (35) qui est opérationnel pour enregistrer, à partir du processus, des valeurs réelles pour des variables de processus (PV) selon lesquelles le processus est en train de fonctionner et l'au moins une mesure de performances (CPM) obtenue dans le cadre du fonctionnement du processus, et pour déterminer des facteurs de correction pour la valeur cible de l'au moins une mesure de performances (CPM) utilisée par le module d'optimisation (33) dans la détermination des valeurs de consigne prédites pour les variables de processus manipulables (MV).

5. Système selon la revendication 4, dans lequel les facteurs de correction représentent les différences entre les valeurs respectives de l'au moins une mesure de performances (CPM) telle que déterminée à partir de l'ensemble de règles floues pour les valeurs de consigne réelles des variables de processus (PV) selon lesquelles le processus est en train de fonctionner et l'une ou plusieurs mesures de performances (CPM) réelles obtenues à partir du processus.

6. Système selon la revendication 4 ou 5, dans lequel le module de compensation d'erreur (35) est invoqué à des intervalles prédéterminés.

7. Système selon l'une quelconque des revendications 1 à 6, comprenant en outre :
un module de génération de règles (17) pour générer un ensemble de règles pour l'au moins une mesure de performances (CPM).

8. Système selon la revendication 7, comprenant en outre :
un module de fuzzification (27) pour générer un ensemble de règles floues à partir de l'ensemble de règles généré.

9. Système selon l'une quelconque des revendications 1 à 8, comprenant en outre :
un module de collecte de données (9) pour collecter des données historiques, qui représentent les variables de processus (PV), obtenues à partir du processus.

10. Système selon la revendication 9, comprenant en outre :
un module de traitement de données (15) pour fournir un ensemble de données à partir des données historiques.

11. Procédé de commande de processus destiné à être utilisé pour commander un processus, qui a une pluralité de variables de processus (PV), comportant une pluralité de variables de processus manipulables (MV), pour obtenir une valeur cible unique pour au moins une mesure de performances (CPM), le procédé comprenant l'étape de :
la prédiction de valeurs de consigne pour au moins certaines des variables de processus manipulables (MV) pour obtenir une valeur cible unique pour l'au moins une mesure de performances (CPM) en fonction d'un ensemble de règles floues, chaque règle floue comprenant une pluralité de points de décision correspondant à des variables fractionnées relatives aux variables de processus (PV) et une pluralité de résultats.

12. Procédé selon la revendication 11, dans lequel l'étape de prédiction de valeur est invoquée à des intervalles prédéterminés.

13. Procédé selon la revendication 11 ou 12, comprenant en outre l'étape de :
la commande automatique du fonctionnement du processus en fonction des valeurs de consigne prédites pour les variables de processus manipulables (MV).

14. Procédé selon l'une quelconque des revendications 11 à 13, comprenant en outre les étapes de :
l'enregistrement, à partir du processus, de valeurs réelles pour des variables de processus (PV) selon lesquelles le processus est en train de fonctionner, et de l'au moins une mesure de performances (CPM) obtenue dans le cadre du fonctionnement du processus ; et
la détermination de facteurs de correction pour la valeur cible de l'au moins une mesure de performances (CPM) utilisée dans la détermination des valeurs de consigne prédites pour les variables de processus manipulables (MV).

15. Procédé selon la revendication 14, dans lequel les facteurs de correction représentent les différences entre les valeurs respectives de l'au moins une mesure de performances (CPM) telle que déterminée à partir de l'ensemble de règles floues pour les valeurs de consigne réelles des variables de processus (PV) selon lesquelles le processus est en train de fonctionner, et l'une ou plusieurs mesures de performances (CPM) réelles obtenues à partir du processus.

16. Procédé selon la revendication 14 ou 15, dans lequel l'étape de la détermination de facteur de correction est invoquée à des intervalles prédéterminés.

17. Procédé selon l'une quelconque des revendications 11 à 16, comprenant en outre l'étape de :
la génération d'un ensemble de règles pour l'au moins une mesure de performances (CPM).

18. Procédé selon la revendication 17, comprenant en outre l'étape de :
la génération d'un ensemble de règles floues à partir de l'ensemble de règles généré.

19. Procédé selon l'une quelconque des revendications 11 à 18, comprenant en outre l'étape de :
la collecte de données historiques, qui représentent les variables de processus (PV), obtenues à partir du processus.

20. Procédé selon la revendication 19, comprenant en outre l'étape de :
la fourniture d'un ensemble de données à partir des données historiques.
